# EUROPÄISCHE PATENTSCHRIFT

(11) **EP 1 667 862 B1**
(45) Veröffentlichungstag und Bekanntmachung des Hinweises auf die Patenterteilung: **07.03.2007**
(21) Anmeldenummer: 04765184.9
(22) Anmeldetag: 14.09.2004
(51) Int. Cl.: B60H 1/00

(54) **AUFDACHKLIMAANLAGE FÜR EIN FAHRZEUG, INSBESONDERE EINEN OMNIBUS**
ROOF-TOP AIR-CONDITIONING SYSTEM FOR A VEHICLE, PARTICULARLY A BUS
INSTALLATION DE CLIMATISATION MONTEE SUR LE TOIT D'UN VEHICULE, NOTAMMENT D'UN OMNIBUS

(30) Priorität: 02.10.2003 DE 10345997; 02.10.2003 DE 20315237 U
(43) Veröffentlichungstag der Anmeldung: 14.06.2006
(73) Patentinhaber: Thermo King Deutschland GmbH, 68766 Hockenheim (DE)
(72) Erfinder: HASSEL, Karl-Heinz, 76684 Östringen (DE); SCHÖN, Siegbert, 75031 Elsenz (DE); MIROSLAV, Vavrik, 28123 Stary Kolin (CZ)
(74) Vertreter: Schirdewahn, Jürgen
(86) Internationale Anmeldenummer: PCT/EP2004/010270
(87) Internationale Veröffentlichungsnummer: WO 2005/032865

(56) Entgegenhaltungen:
- EP-A- 1 319 536
- DE-A- 19 913 776
- US-A1- 2002 073 723
- US-B1- 6 763 670

## Beschreibung

Die Erfindung bezieht sich auf eine Aufdachklimaanlage für ein Fahrzeug, insbesondere einen Omnibus. In Betracht gezogen werden dabei insbesondere Landfahrzeuge, unter diesen speziell Nutzfahrzeuge. Allgemein ist dabei auf die Bedürfnisse von schienengebundenen und schienenungebundenen Nutzfahrzeugen abgestellt. Hauptanwendungsfall sind Aufdachklimaanlagen auf Omnibussen.

Eine derartige Aufdachklimaanlage mit den Merkmalen des Oberbegriffs von Anspruch 1 ist aus der US-A 4 679 616 bekannt. Bei dieser bekannten Aufdachklimaanlage ist die gesamte hochdruckseitige Wärmetauscheinrichtung mit dazugehöriger Lüftereinrichtung in einem eigenen Gehäuse als ein erstes Modul zusammengefaßt. Ein zweites Modul stellt die gesamte Verdampfereinrichtung, im folgenden unter Verallgemeinerung auch Verdampfungseinrichtung genannt, mit dazugehörigen Gebläsen dar. Es ist dabei nicht vorgesehen, diese beiden Module noch ihrerseits modulmäßig zu unterteilen. Es ist lediglich vorgesehen, jeweils eines dieser Module zu demontieren, ein anderes dieser Module neu zu montieren, eines dieser Module auszutauschen oder die gesamte Aufdachklimaanlage aus derartigen zwei Modulen zusammenzusetzen. Ansonsten wird in konventioneller Weise die Konstruktion der Aufdachklimaanlage nach den Bedürfnissen des jeweiligen Fahrzeugs festgelegt. Insbesondere ist nicht daran gedacht, gleichartige Module für unterschiedliche Leistungsanforderungen verschiedenartiger Fahrzeuge anzuwenden. Es ist auch nicht in Betracht gezogen, im Bereich der hochdruckseitigen Wärmetauscheinrichtung einerseits oder im Bereich der Verdampfungseinrichtung andererseits mehrere Module jeweils der betreffenden Art, oder gar leistungsmäßig abgestufte oder gleiche Module, einzusetzen. Der durch den Modulaufbau erreichbare Rationalisierungseffekt bleibt daher relativ klein.

Eine weitere derartige Aufdachklimaanlage wird in der gattungsgemäßen US 2002/0073723 offenbart.

Der Erfindung liegt allgemein die Aufgabe zugrunde, eine Aufdachklimaanlage mit den Merkmalen des Oberbegriffs von Anspruch 1 weiter zu rationalisieren, wobei zunächst besonderes Augenmerk auf die hochdruckseitige Wärmetauscheinrichtung gelegt wird. Bei dieser handelt es sich bei einem unterkritischen Betrieb um eine Verflüssigereinrichtung und bei einem überkritischen Betrieb um einen Gaskühler (vgl. auch Anspruch 29).

Diese allgemeine Aufgabe wird durch die Merkmale von Anspruch 1 gelöst.

Die Erfindung geht dabei von der Erkenntnis aus, daß die hochdruckseitige Wärmetauscheinrichtung sowohl vom Gesichtspunkt der Herstellungskosten als auch vom Raumbedarf auf dem Dach des Fahrzeugs im Vergleich zu den sonstigen Bauelementen der Aufdachklimaanlage eine hervorstechende Bedeutung hat. Aus dieser Erkenntnis heraus wird im Rahmen der Erfindung davon abgegangen, die Dimensionierung der hochdruckseitigen Wärmetauscheinrichtung in Abhängigkeit vom Fahrzeugtyp vorzunehmen. Es wird vielmehr das Hauptaugenmerk auf eine Vereinfachung von Herstellung, Lagerhaltung und Bereitstellung von baukastenartigen Bauelementen, im Rahmen der Erfindung auch Module genannt, zu legen. Im Idealfall wird dabei sogar nur eine einzige Modulart zum Aufbau der hochdruckseitigen Wärmetauscheinrichtung eingesetzt. Ein solches Modul hat dann unabhängig vom Bautyp einer Fahrzeugart, z.B. eines Omnibusses, eine Minimalauslegung mindestens in bezug auf Nennleistung und Druckverlust und vorzugsweise auch hinsichtlich Aufbau und Dimensionierung aller Komponenten. Bei höherem Bedarf an Nennleistung erfolgt dann je nach den Anforderungen eine baukastenmäßige Zusammensetzung aus derartigen einheitlich normierten Modulen.

Wie später noch im Zusammenhang mit Anspruch 8 angesprochen ist, betrifft die Normierung des Aufbaus der einzelnen Module insbesondere auch eine Normierung der Gehäuse der einzelnen Module. Dies betrifft nicht nur deren äußere Abmessungen, z. B. Länge, Breite und Höhe bei quaderförmigen Modulen, sondern im Idealfall im ganzen einheitlich geformte Gehäuse, die damit ihrerseits Serienteile für die Herstellung der Module darstellen.
Der Erfindungsgedanke ist geometrisch besonders anschaulich dann, wenn wenigstens zwei gleichartige derartige Module miteinander verschaltet werden. Aber selbst wenn nur ein einziges derartiges Modul eingesetzt wird, ist der Erfindungsgedanke bereits erfüllt, wenn dieses Modul aus dem genannten Baukastensatz stammt, der auch zum Aufbau von hochdruckseitigen Wärmetauscheinrichtungen beispielsweise doppelter Nennleistung durch Kopplung von zwei gleichen Modulen Anwendung finden kann.
Dies ist nicht zu verwechseln mit der Konstruktionsweise des erwähnten Standes der Technik der US-A 4 679 616, von der die Erfindung ausgeht, nämlich immer nur ein einziges Modul für die hochdruckseitige Wärmetauscheinrichtung einzusetzen, dieses Modul aber für jeden Bautypen eines Fahrzeugs neu zu dimensionieren und zu gestalten und somit nicht baukastenmäßig für verschiedene Fahrzeugtypen bereitzustellen.

Auch nicht zu verwechseln ist die Konstruktionsweise gemäß der Erfindung mit den bekannten Bauweisen innerhalb fahrzeugspezifischer Gehäuse je nach Nennleistung unterschiedlicher Anzahlen von Serienteilen miteinander zu verschalten, selbst wenn in den entsprechenden Veröffentlichungen solche Serienteile ihrerseits als Module benannt sind.
So sind in der US 5 121 613 A derartige Serienteile offenbart, die als Wärmetauscherelemente mit lamellenverrippten Rohren zur Führung eines Kühlmittels ausgebildet sind und in variabel wählbarer Anzahl in dem Gehäuse einer stationären Kühlanlage angeordnet werden können.
So sind ferner auch bei einer Aufdachklimaanlage für ein Fahrzeug gemäß der DE 195 05 403 C2 in nur einem einzigen fahrzeugspezifischen Gehäuse verschiedenartige Serienteile sowohl einer hochdruckseitigen Wärmetauscheinrichtung als auch einer Verdampfungseinrichtung jeweils in variabler Anzahl sowohl in Längs- als auch in Querrichtung des Fahrzeugs miteinander gekoppelt, und zwar einerseits Verdampferelemente und andererseits Verflüssigerelemente. Ähnliches zeigt DE 77 14 617 U1 bei deren Aufdachklimaanlage für ein Fahrzeug Kondensatorpakete und Verdampferpakete jeweils als Serienteile ausgebildet sind, die sich mit normierter Baulänge und Kopplung gleichartiger Serienelemente in Querrichtung jeweils in Längsrichtung des Fahrzeugs erstrecken.

Die reinste Art einer erfindungsgemäßen Aufdachklimaanlage liegt dann vor, wenn überhaupt nur in dem Baukasten für hochdruckseitige Wärmetauscheinrichtungen unterschiedlicher Nennleistung Module mit gleicher Nennleistung bereitstehen, von denen je nach der gewünschten Nennleistung mindestens ein Modul, in anderen Fällen zwei und mehr Module gleicher Art miteinander rasterartig gekoppelt werden. Die Erfindung schließt es aber auch nicht aus, in dem Baukastensystem der bereitgestellten Module für hochdruckseitige Wärmetauscheinrichtungen auch auf unterschiedliche Nennleistungen abgestellte verschiedene Grundmodule mit einzubeziehen, wobei diese beispielsweise leistungsmäßig ganzzahlige Vielfache des nennleistungskleinsten Basismoduls darstellen können oder aber nach praktischen Anforderungen anderweitig leistungsmäßig abgestuft sind. In allen Fällen liegt dabei jedoch die Zielsetzung zugrunde, im Baukasten dieser Module allenfalls eine kleine Anzahl von Modulen unterschiedlicher Nennleistung anzubieten. Wie später noch im einzelnen klar wird, kann man praktisch für alle Anforderungen bei Omnibussen mit Modulen für die hochdruckseitige Wärmetauscheinrichtung mit höchstens drei Bauarten von Modulen unterschiedlicher Nennleistung auskommen, die darüber hinaus sogar in den geometrischen Außenmaßen gleich gestaltet sein können (zum letztgenannten Fall vgl. Anspruch 16).

Bei einem Fahrzeug allgemeiner Art ist meistens die für die Montage einer Aufdachklimaanlage zur Verfügung stehende Fläche auf dem Dach in Längsrichtung des Fahrzeugs wesentlich länger als in Breitenrichtung des Fahrzeugs. Dies gilt im Regelfall für Omnibusse. Schon aus diesem Gesichtspunkt ist es empfehlenswert, bei baukastenmäßiger Kopplung mehrerer Module diese Kopplung in Längsrichtung des Fahrzeugs vorzunehmen. Dementsprechend sind dann auch die am Modul von vornherein oder bei der Kopplung vorzusehenden Kopplungselemente entsprechend einer solchen Kopplung anzuordnen. Die Kopplungselemente können dabei vielfach sein. Neben Kopplungen beliebiger Art können dabei auch beispielsweise Verlötungen, Verschweißungen, Verschraubungen oder Vernietungen vorgesehen werden.

Der Gedanke, die Kopplung der Module in Längsrichtung des Fahrzeugs vorzusehen, enthält aber nicht nur diesen allgemeinen Gesichtspunkt, sondern kann auch unter Betrachtung der Erstreckungsgeometrie des Moduls auf dem Dach noch spezialisiert werden. So kann das Modul im Prinzip jede Form einer Basisfläche haben, welche die Fläche des Fahrzeugdaches einnimmt. Ein Spezialfall wäre dabei eine quadratische Basisfläche. Meist wird das Modul aber eine langgestreckte Basisfläche haben, die dann meist die Grundform eines eckigen oder abgerundeten Rechtecks hat. Der Gedanke der Kopplung von Modulen in Längsrichtung des Fahrzeuges würde dann auch die Denkmöglichkeit enthalten, die Module der hochdruckseitigen Wärmetauscheinrichtung quer zur Längsachse des Fahrzeugdaches anzuordnen und dabei die Kopplung in Längsrichtung des Fahrzeuges Seite an Seite vorzunehmen. Bei weitem bevorzugt wird jedoch eine Anordnung, bei der die Basisfläche des Moduls langgestreckt ist und die Längsachse des Moduls mit der Längsachse des Fahrzeugs oder dessen oberer Dachfläche entweder übereinstimmt, parallel dazu verläuft oder wenigstens überwiegend in Längsrichtung des Fahrzeugs orientiert ist.

Der Erfindungsgedanke ist darüber hinaus invariant hinsichtlich der Entscheidung, für die Klimaanlage Rundrohre oder Flachrohre einzusetzen. Es ist vielmehr bevorzugt (Anspruch 5), das bei dem Modul sowieso vorhandene Gehäuse der hochdruckseitigen Wärmetauscheinrichtung so zu bemessen, daß zur Führung des inneren Kältemittels wahlweise Rundrohre oder Flachrohre einbaubar sind. Dies eröffnet die Möglichkeit, das Modul im Baukasten oder im Auslieferungslager des Herstellers oder Händlers nur als Halbfertigteil bereitzustellen und es dem Kunden zu überlassen, ob er je nach seinen Anforderungen Rundrohre oder Flachrohre für die Verwendung am Fahrzeug einsetzen möchte. Dies schließt nicht aus, daß auch schon von Herstellerseite für Großserien Rundrohre oder Flachrohre von vornherein eingebaut werden.

Die erfindungsgemäße Aufdachklimaanlage ist ihrer Grundstruktur nach darauf abgestellt, daß die zu klimatisierende Luft gekühlt werden soll (vgl. die Elemente des Anspruchs 1). Im Sinne der allgemeinen Bedeutung des Begriffs Klimatisierung kann aber auch die erfindungsgemäße Aufdachklimaanlage zu einer wahlweisen Nutzung auch als Heizanlage für zu klimatisierende Luft weitergebildet werden, indem sie auch eine Heizeinrichtung zur Erwärmung der zu klimatisierenden Luft enthält. Eine baulich bevorzugte Anordnung zeigt dabei Anspruch 7. Es wird dabei von der allgemein üblichen Technik als Hauptgestaltungsmöglichkeit ausgegangen, einen Wärmeträger in üblicher Weise zur Verfügung zu stellen, meist aus dem Kühlkreislauf eines Verbrennungsmotors des Fahrzeugs. Sollte dieser nicht vorhanden sein, oder aus anderen Gründen, kann man beispielsweise aber auch eine elektrische Heizeinrichtung vorsehen oder eine solche allgemein als Ergänzung installieren.

Wenn nur eine Art von Modulen der hochdruckseitigen Wärmetauscheinrichtung zum Einsatz kommt, haben die Module von vornherein wegen ihrer Serienfertigung gleiche Basisflächen. Wenn jedoch in dem bereitstehenden Baukasten in der schon erörterten Weise mehrere Module unterschiedlicher Nennleistung bereitgestellt sind, wird angestrebt, daß im Kopplungsraster auf dem Dach des Fahrzeugs mindestens einige, vorzugsweise alle, Module mindestens mit jeweils gleicher Längserstreckungslänge angeordnet sind. Dabei wird besonders Bezug genommen auf den schon erörterten bevorzugten Fall, daß die Module langgestreckt ausgebildet sind und mit ihrer Längserstreckungsachse längs der Fahrzeugachse bzw. dessen Daches orientiert sind oder insbesondere mit dieser zusammenfallen oder mit dieser parallel sind. Es bleibt dabei die Möglichkeit nicht ausgeschlossen, sondern ist sogar bevorzugt, daß in dem Raster auch mindestens einige, vorzugsweise alle, Module jeweils gleiche Quererstreckungslänge haben.

Jede Aufdachklimaanlage gemäß der Erfindung hat auch die innere Kanalanordnung zur Führung von zu klimatisierender Luft. Bevorzugt ist im Rahmen der Erfindung eine Bauweise, bei der die - gegebenenfalls ihrerseits modular mit eigenem Gehäuse gefertigte - innere Kanalanordnung gesondert vom Modul der hochdruckseitigen Wärmetauscheinrichtung bereitgestellt und seitlich an dieses angeschlossen ist. Die Erfindung schließt aber auch nicht eine noch größere Integrationslösung des Moduls der hochdruckseitigen Wärmetauscheinrichtung aus, bei der mindestens ein Abschnitt der inneren Kanalanordnung auch noch im Modul der hochdruckseitigen Wärmetauscheinrichtung mit enthalten ist, wobei vorzugsweise darüber hinaus auch noch eine Verdampfungseinrichtung im Modul der hochdruckseitigen Wärmetauscheinrichtung mit enthalten sein kann. Diese letztgenannte Möglichkeit ist wiederum nicht mit dem Gedanken zu verwechseln, daß pro Fahrzeugtyp eine Aufdachklimaanlage als eine Einheit gefertigt ist, die man dann auch Modul nennen und auf Fahrzeugen gleichen Typs in Serie nach Vorfertigung montieren kann. Es ist in diesem Falle wiederum nur im Sinne der Erfindung daran gedacht, in dem Baukasten auf gleiche Nennleistung und dabei zweckmäßig auch auf gleichen Druckverlust abgestellte Einheiten zu haben, die dann, wenn mehr als eine Mindestleistung erfordert wird, als Module rasterartig koppelbar sind bzw. dann, wenn von vornherein die Nennleistung in kleineren Einheiten bereitgestellt werden soll, schon originär in Kopplung auf dem Dach des Fahrzeugs angeordnet werden.

Unabhängig davon, ob die Verdampfungseinrichtung in das Modul der hochdruckseitigen Wärmetauscheinrichtung einbezogen ist oder nicht, ist es zweckmäßig, daß die Verdampfungseinrichtung seitlich von der inneren Kanalanordnung angeordnet ist, was in jedem Fall eine günstige Flächenaufteilung der Aufdachklimaanlage ergibt.

Bei einer bevorzugten Ausführungsform ist bzw. sind die Verdampfungseinrichtung und/oder die innere Kanaleinrichtung für sich mit jeweils eigenem Gehäusemodular ausgebildet. Es ist dabei denkbar, für alle Module unterschiedlicher Nennleistung einer hochdruckseitigen Wärmetauscheinrichtung für die innere Kanaleinrichtung bzw. mindestens einen Abschnitt derselben und/oder die Verdampfungseinrichtung jeweils nur ein einziges Modul vorzusehen. Im Rahmen der Erfindung wird aber gerade an dieser Stelle zur Schafffung hoher baukastenmäßiger Flexibilität beim Aufbau der ganzen Aufdachklimaanlage eine solche Weiterbildung vorgesehen, bei der auch die Verdampfungseinrichtung ihrerseits in zweckmäßig nur wenigen Leistungsstufen vorgesehen ist und so je nach Auslegung der ganzen Aufdachklimaanlage eine entsprechende Wahlmöglichkeit aus dem gesamten Baukasten aller Module vorhanden ist. Dieser allgemeine Gedanke (vgl. Anspruch 12) kann dann noch dadurch weitergebildet werden (vgl. Anspruch 16), daß bei dem Modul der hochdruckseitigen Wärmetauscheinrichtung und/oder bei Modulen der Verdampfungseinrichtung zweckmäßig deren ganzer sonstiger Aufbau gleich bleibt und die Abstufung nach Nennleistung vorzugsweise ausschließlich oder im wesentlichen durch Wahl einer jeweils angepaßten Anzahl gleicher Lüftereinheiten im Modul der hochdruckseitigen Wärmetauscheinrichtung bzw. Gebläseeinheiten in der Verdampfungseinrichtung wählbar ist. Dabei sind die betreffenden Module so vorbereitet, daß gleiche Bauformen von Gebläse- bzw. Lüftereinheiten, die sich nur leistungsmäßig unterscheiden, in einer relativ kleinen variierenden Anzahl im Modul eingesetzt sind oder auch sogar unter Nennleistungsänderung nachrüstbar sind. Dieser Gedanke ermöglicht es, alle Nennleistungsabstufungen von Wärmetauschleistung oder Verdampferleistung bei gleicher äußerer Bauform der abgestuften betreffenden Module nur in deren Innerem vorzunehmen.

Es wurde bereits angesprochen, daß sich zweckmäßig die hochdruckseitige Wärmetauscheinrichtung bzw. deren Modul in Längsrichtung des Fahrzeugs erstreckt. In Weiterbildung dieses Gedankens ist zweckmäßig vorgesehen (vgl. Anspruch 17), daß sich auch die Verdampfungseinrichtung und mindestens ein Abschnitt der inneren Kanalordnung jeweils in Längsrichtung des Fahrzeugs bzw. des Moduls der hochdruckseitigen Wärmetauscheinrichtung erstreckt oder erstrecken, was besonders dann günstig ist, wenn auch die Verdampfungseinrichtung und mindestens ein Abschnitt der inneren Kanalanordnung modular aufgebaut sind.

Unabhängig davon, ob nun die innere Kanalanordnung und die Verdampfungseinrichtung ihrerseits modular angeordnet sind oder nicht, wobei sie dann, zweckmäßig insbesondere in Querrichtung, einen eigenen Abschnitt einnehmen, kann man durch besondere Geometrie der Aufdachklimaanlage in Querrichtung des Fahrzeugs auch im Sinne der Ansprüche 13 bis 15 noch eine Anpassung an den gekrümmten Verlauf des Daches des Fahrzeugs in Querrichtung vornehmen. Wenn nämlich die verschiedenen Module bzw. auch nur entsprechende Anordnungsabschnitte in Längsrichtung des Fahrzeugs verlaufende oder orientierte Fugen oder Kopplungslinien haben, ermöglicht dies, mindestens ein Paar von in Querrichtung aneinander anschließenden Abschnitten, Modulen oder Folgen von Abschnitten und Modulen in bezug auf die Horizontale oder auch in bezug auf den benachbarten Abschnitt oder das benachbarte Modul abgewinkelt anzuordnen, wobei in der gesamten Querrichtung gesehen sogar eine mehrfache Abwinklung stattfinden kann, die der Rundung oder sonstigen Abwinklung der Montagefläche auf dem Dach des Fahrzeugs folgt oder an diese mindestens angepaßt ist. Dabei kann man feststellbare schnarnierartige Kopplungen zwischen den benachbarten Abschnitten, Modulen oder Paaren von Abschnitten oder Modulen vorsehen, was insbesondere bei in Querrichtung aufeinanderfolgenden Modulen von Bedeutung ist. Bei in Querrichtung folgenden Abschnitten oder Folgen von Abschnitten oder Modulen kann man auch feste winklige Verbindungen vorsehen. Eine besonders bevorzugte zweckmäßige Variante der Winkelverbindung besteht dabei darin, diese als Sollbiegestelle zwischen benachbarten Modulen, Abschnitten oder Paaren von Modulen und Abschnitten vorzusehen. Dies ist nicht nur konstruktiv besonders einfach, sondern kann auch die Montagearbeit auf dem Dach erleichtern, wenn man sich bei der Dachmontage das Gewicht der benachbarten gegeneinander zu biegenden Bereiche der Aufdachklimaanlage für die Einstellung der gewünschten winkligen Endstellung auf dem Dach des Fahrzeugs nutzbar macht. In diesem Fall der Ausnutzung des Eigengewichts von Bereichen der Aufdachklimaanlage kann man sogar von eigenen Mitteln zur Fixierung der jeweiligen Abwinklungsstellung absehen, da diese Fixierung dauerhaft durch das Gewicht der Module bzw. Abschnitte gewährleistet ist. Das schließt nicht aus, daß man aus Sicherheitsüberlegungen doch noch Fixierungen der winkligen Montagestellung vorsieht.

Während die zuletzt geschilderten Maßnahmen eine Anpassung an einen anderen räumlichen Verlauf der Montagefläche des Daches des Fahrzeugs als einer Ebene in Querrichtung des Fahrzeugs betreffen, bezieht sich Anspruch 15 auf eine andersartige Anpassung an unterschiedliche Montageflächen in Querrichtung des Fahrzeugs, soweit diese nämlich unterschiedlich breit sind. Aus Gründen gleichmäßiger Gewichtsverteilung empfiehlt es sich in solchen Fällen, die Aufdachklimaanlage über die ganze Breite der Montagefläche auf dem Fahrzeug zu verteilen, wozu zum Ausgleich des mindestens teilweise modularen oder in der Breitenrichtung feststehenden Aufbaus in dieser Querrichtung mindestens eine Überbrückungseinrichtung zwischen den in Querrichtung benachbarten Paaren von Abschnitten und Modulen oder von Abschnitt und Modul vorgesehen ist bzw. sind (vgl. Anspruch 15).

Vorzugsweise wird (im Sinne von Anspruch 18) die Aufdachklimaanlage in Querschnittsrichtung symmetrisch zu ihrem Zentrum aufgebaut, wobei dieses von der Anordnung der hochdruckseitigen Wärmetauscheinrichtung eingenommen ist. Beidseitig schließen dann außen zunächst die innere Kanalanordnung und wiederum außen an diese beidseitig die Verdampfungseinrichtung an, wobei letztere mit der Expansionseinrichtung zweckmäßig gekoppelt ist.

Gerade bei einem Omnibus, aber auch bei einigen anderen Fahrzeugen, wird eine Aufdachklimaanlage zweckmäßig so eingerichtet, daß ein Umschaltventil zwischen den Betriebsweisen einer Klimatisierung der Innenluft des Fahrzeugs, der Klimatisierung von in dem Fahrzeug eingeleiteter Außenluft und/oder eines Mischbetriebs zwischen diesen beiden Betriebsweisen eingestellt werden kann. Insbesondere bei modularem Aufbau mindestens eines Abschnittes der inneren Kanalanordnung der Aufdachklimaanlage ist zweckmäßig in dieser ein Einbauraum vorgesehen, in dem ein solches Umschaltventil eingebaut ist oder einbaubar ist. Dieses Umschaltventil kann in ganz konventioneller Weise von einer Einstellklappe gebildet sein.

Die hochdruckseitige Wärmetauscheinrichtung ist konventionell bei Aufdachklimaanlagen in Strömungsrichtung des inneren Kältemittels hinter einer Verdichtungseinrichtung geschaltet, die nicht wie die hochdruckseitige Wärmetauscheinrichtung in der Aufdachklimaanlage, sondern im Motorraum des Fahrzeugs angeordnet ist oder wenigstens vom Fahrzeug mechanisch oder hydraulisch angetrieben ist. In weiterer Rationalisierung ist im Rahmen der Erfindung vorzugsweise eine solche Verdichtungseinrichtung auch noch in die Aufdachklimaanlage mit einbezogen, und zwar sinngemäß bei mindestens einem Modul der hochdruckseitigen Wärmetauscheinrichtung nebst deren Lüftereinrichtung. Vorzugsweise stellt dabei die ergänzende Verdichtungseinrichtung ihrerseits ein eigenes Modul mit eigenem Gehäuse dar.

Eine weitere Ergänzung eines Moduls der hochdruckseitigen Wärmetauscheinrichtung nebst Lüftereinrichtung bei der erfindungsgemäßen Aufdachklimaanlage zeigen die Ansprüche 22 bis 28, welche die Einbeziehung einer Brennstoffzelleneinrichtung mit Weiterbildungen dieses Gedankens betreffen. Die Brennstoffzelleneinrichtung dient dabei bei Einbeziehung der Verdichtungseinrichtung in die Aufdachklimaanlage mindestens als Erzeuger des Betriebsstroms dieser Verdichtungseinrichtung und sonst beispielsweise auch, gegebenenfalls ergänzend, zur Stromerzeugung einer Nutzung der Aufdachklimaanlage auch für Heizzwecke. Auch die Lüfter und Gebläse benötigen Bereitstellung von elektrischem Strom. Dies schließt nicht aus, daß die Brennstoffzelleneinrichtung auch noch für sonstige Zwecke benutzt wird, z.B. als Nutzstromaggregat für das Fahrzeug selbst.

Die Betriebsweise der Aufdachklimaanlage kann entsprechend der jahrzehntelangen konventionellen Technik unterkritisch oder auch entsprechend moderner Technik überkritisch ausgelegt sein, wobei der überkritische Betrieb beispielsweise Kohlendioxid als Betriebsmittel für das innere Kältemittel einsetzt.
Im letztgenannten Fall enthält vorzugsweise die hochdruckseitige Wärmetauscheinrichtung bzw. deren Modul auch noch einen Gaskühler für das innere Kältemittel (vgl. Anspruch 29).

Die Erfindung wird im folgenden anhand schematischer Zeichnungen an mehreren Ausführungsbeispielen noch näher erläutert. Es zeigen:
Fig. 1 eine geschnittene schräge Draufsicht auf eine erste Ausführungsform einer Aufdachklimaanlage;
Fig. 2 in gleicher Darstellung wie Fig. 1 eine zweite Ausführungsform mit gleichem Aufbau wie die erste Ausführungsform, jedoch ungeschnitten und mit unterschiedlicher Nennleistung;
Fig. 3 eine geschnittene Herauszeichnung der hochdruckseitigen Wärmetauscheinrichtung von Fig. 2;
Fig. 4 eine vergrößerte Herauszeichnung eines Moduls der hochdruckseitigen Wärmetauscheinrichtung gemäß Fig. 3;
Fig. 5 eine Variante von Fig. 4 mit bei gleichem grundsätzlichen Aufbau höherer Nennleistung;
Fig. 6 und 7 Darstellungen gemäß Fig. 4 und Fig. 5, aber mit unterschiedlicher Rohrgeometrie der Führungsrohre für das innere Kältemittel;
Fig. 8 einen Querschnitt durch eine erfindungsgemäße Aufdachklimaanlage;
Fig. 8a eine vergrößerte Teildarstellung von Fig. 8;
Fig. 9 eine Variante von Fig. 8a;
Fig. 10 eine vergrößerte Herauszeichnung eines Abschnitts der inneren Kanalanordnung als eigenständiges Modul mit Gehäuse;
Fig. 10a dieselbe Darstellung wie Fig. 10 mit zusätzlichem Einbau einer Einstellklappe eines Umschaltventils zwischen unterschiedlichen Betriebsweisen der Klimatisierung;
Fig. 11 ein Verrohrungsdiagramm einer erfindungsgemäßen Aufdachklimaanlage;
Fig. 12 eine Alternative zu Fig. 11;
Fig. 13 eine Ansicht einer möglichen Ausführungsform einer erfindungsgemäßen Aufdachklimaanlage von unten;
Fig. 13a eine Schnittzeichnung nach der Linie XIII-XIII in Fig. 13;
Fig. 14 einen Querschnitt durch ein eigenständiges Modul einer in die erfindungsgemäße Aufdachklimaanlage mit einbeziehbaren Brennstoffzelle;
Fig. 15 einen Querschnitt durch einen eigenständigen Tank für Brennstoff einer solchen Brennstoffzelle, wobei dieser Tank selbst seinerseits als eigenständiges Modul mit Gehäuse zum Einbau in der erfindungsgemäßen Aufdachklimaanlage gestaltet ist; und
Fig. 16 eine Alternative zu Fig. 11.

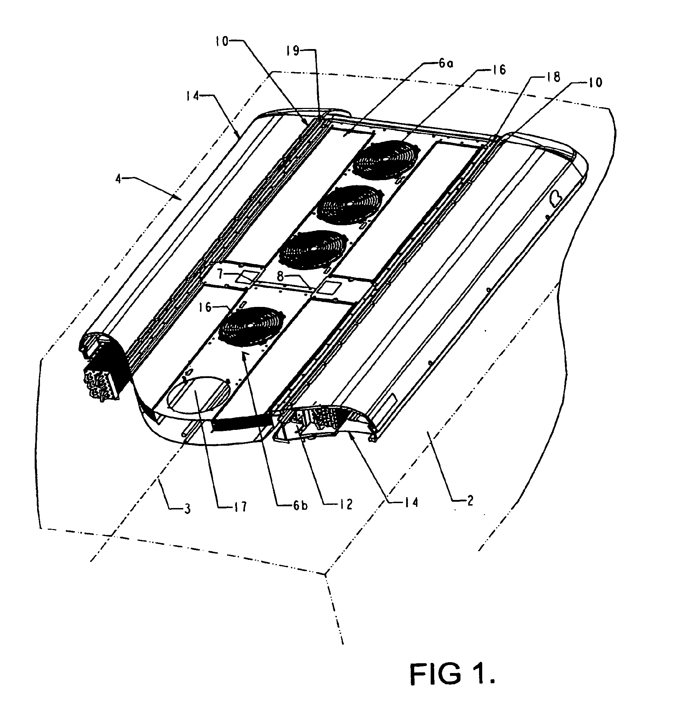

In Fig. 1 ist mit gestrichelter Linie eine Montagefläche 2 auf dem Dach eines nicht dargestellten Omnibusses angedeutet, auf der eine erste Ausführungsform einer Aufdachklimaanlage 4 montiert ist.

Die Aufdachklimaanlage ist hier ebenso wie in den meisten anderen Ausführungsformen ausschließlich aus baukastenmäßigen Modulen zusammengesetzt, die im Einzelfall abgestufte Nennparameter haben können. Alle Module einer bestimmten Art haben bei den dargestellten Ausführungsformen jeweils unabhängig von ihren Nennparametern eine vorgegebene äußere Geometrie, welche durch ein Gehäuse des betreffenden Moduls bestimmt ist.

Die Aufdachklimaanlage 4 gemäß Fig. 1 weist jeweils mit etwa rechteckiger Basisfläche verschiedene Module auf, die sich parallel zur Längsachse 3 der Montagefläche 2 erstrecken. In Breitenrichtung der Montagefläche 2 gesehen ist dabei eine Folge von zwei Modulen 6 einer hochdruckseitigen Wärmetauscheinrichtung mit unterschiedlicher Nennleistung angeordnet, die stirnseitig ohne seitlichen Versatz aneinandergekoppelt sind. Zur Kopplung sind überlappende Wandfortsätze 7 der Module 6 vorgesehen, die durch Schrauben oder Nieten 8 miteinander befestigt sind.

Zu beiden Seiten der Module 6 und jeweils mit im wesentlichen gleicher Längserstreckung sind Seite an Seite jeweils Module 10 einer inneren Kanalanordnung 12 zur Führung von zu klimatisierender Luft angeordnet. Längs deren beiden Außenseiten erstrecken sich dann in jeweils gleichartiger Zuordnung Module 14 einer Verdampfungseinrichtung.

Die beiden Module 6 der Wärmetauscheinrichtung unterscheiden sich in Fig. 1 in der Nennleistung dadurch, daß in dem einen Modul 6a drei Lüfter 16 eingebaut sind, während das andere Modul 6b bei gleicher Längserstreckung des Moduls nur einen eingebauten Lüfter 16 hat.

In Fig. 1 sind die Lüfter nur durch ihre Abdeckgitter dargestellt. Im Modul 6b ist zusätzlich eine Einbaustelle 17 ohne Lüfter und ohne Abdeckgitter angedeutet, die wahlweise ebenso wie eine dritte nicht dargestellte Einbaustelle 17 mit einem Lüfter 16 mitsamt Abdeckgitter bestückt sein kann, aber nicht ist. Wenn die Einbaustelle 17 nicht bestückt ist, muß sie in nicht dargestellter Weise durch einen Deckel abgeschlossen sein.

Zwischen den Modulen 6 und 10 sind seitliche Querverbindungen 18, 19 der gleichen Art wie die Querverbindungen 7, 8 angedeutet. Nicht dargestellt, aber entsprechend ergänzt zu denken, sind seitliche Querverbindungen zwischen den Modulen 10 und 14.

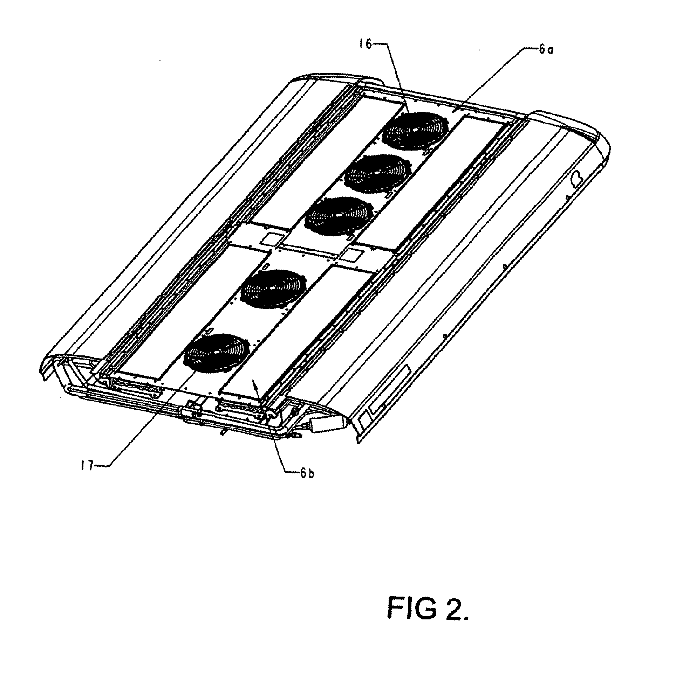

Fig. 2 variiert die Darstellung von Fig. 1 lediglich dadurch, daß im Modul 6b in Fig. 1 die nicht besetzte Einbaustelle 17 auch durch einen Lüfter 16 mit dem dargestellten Abdeckgitter bestückt ist.

Beim Vergleich der Fig. 1 und 2 erkennt man, daß man bei sonst gleicher Außengeometrie eines Moduls 6 dieses wahlweise mit einem Lüfter 16 (Fig. 1), zwei Lüftern 16 (Fig. 2) oder drei Lüftern 16 (Modul 6a in Fig. 1 und 2) bestücken kann. Dabei kann man durch sonst gleichen Aufbau der Module 6 drei unterschiedliche Nennleistungen jeweils in einem Modul 6 erzeugen.

Außerdem zeigen sowohl Fig. 1 als auch Fig. 2, daß man auch die Gesamtleistung der hochdruckseitigen Wärmetauscheinrichtung durch Zusammensetzung von zwei Modulen mit jeweils unterschiedlicher Nennleistung (Nennleistungen eins und drei in Fig. 1 sowie zwei und drei in Fig. 2) erzeugen kann.

In nicht dargestellter Weise können dabei weitere Variationen vorgesehen werden. Insbesondere kommt dabei zum einen die axiale Hintereinanderschaltung von mehr als zwei Modulen 6 und zum anderen auch die Bestückung jeweils eines Moduls mit mehr als drei Lüftern 16 in Frage. Bei Omnibussen hat es sich in der Praxis bewährt, mit Modulen sonst gleicher äußerer Geometrie wie im Ausführungsbeispiel, jedoch mit nennleistungsmäßiger Variation zwischen zwei, drei und vier Lüftern, auszukommen.

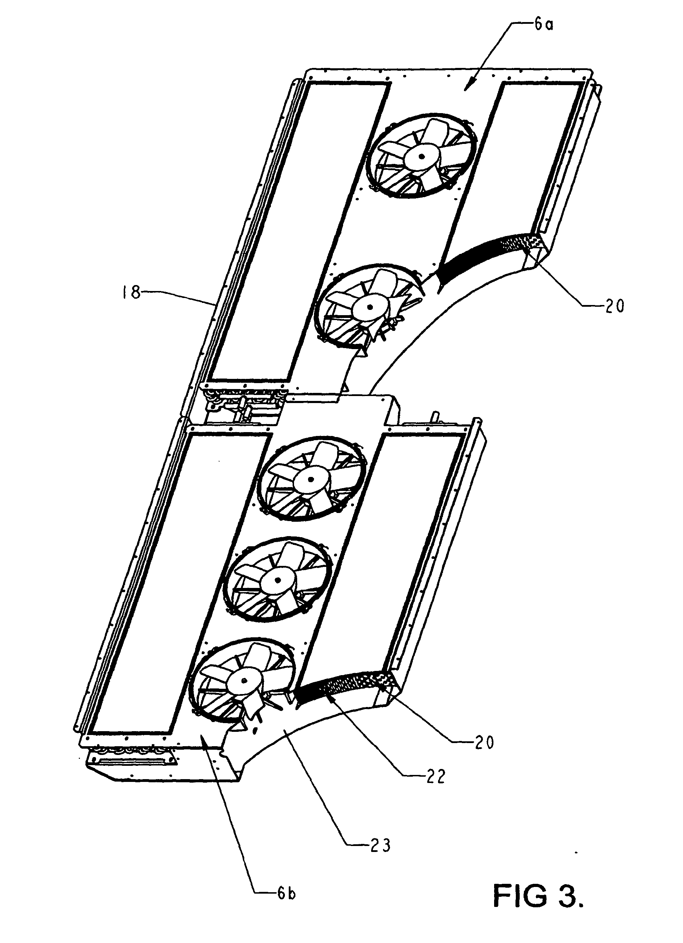

Der Aufbau der Module ist mehr im einzelnen aus den Fig. 3 bis 9 zu erkennen.

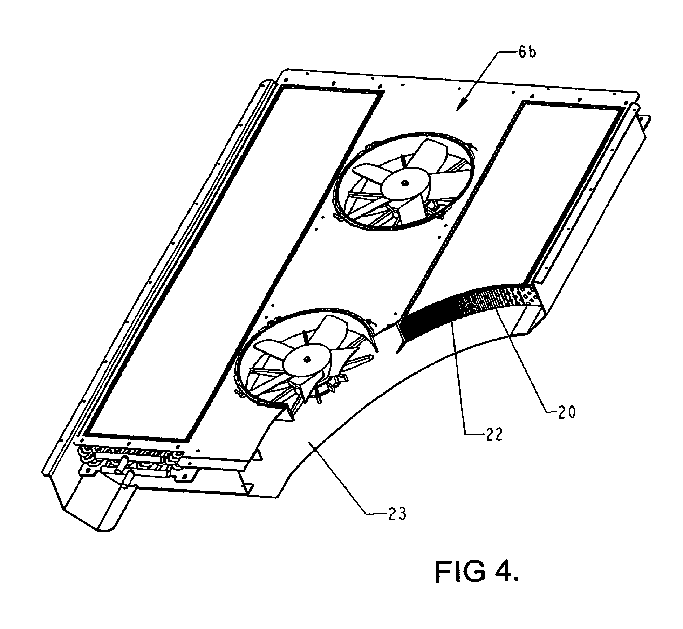

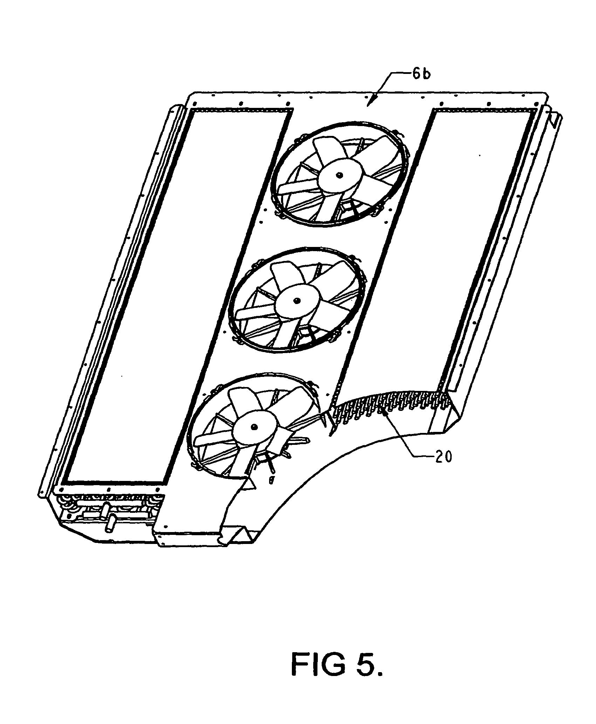

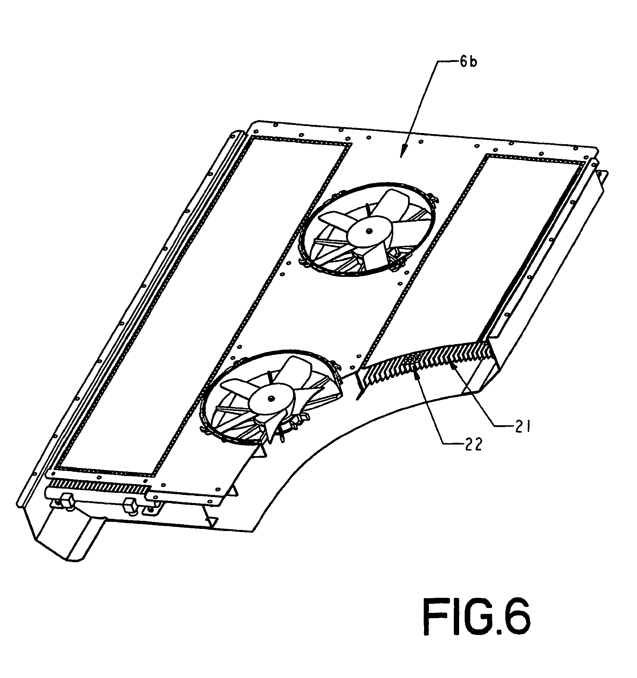

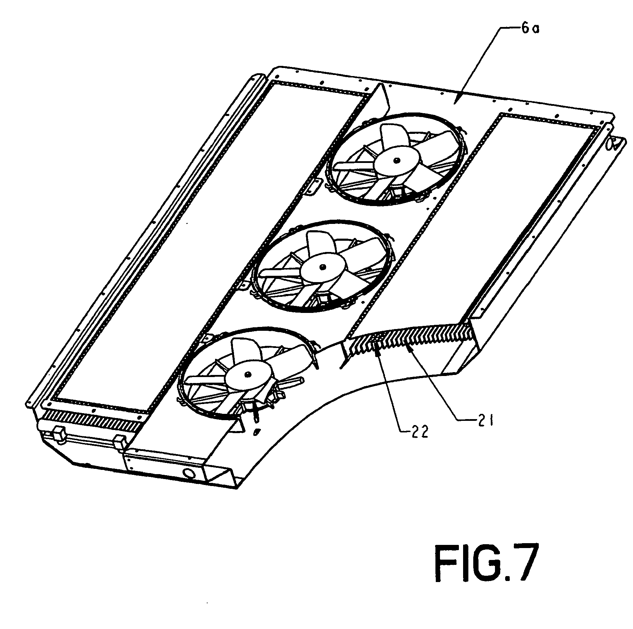

Aus den Fig. 4 und 5 einerseits sowie 6 und 7 andererseits kann man zunächst erkennen, daß bei sonst gleichbleibender Außengeometrie bzw. Modulgröße und insbesondere Modulhöhe die Geometrie der das innere Kältemittel führenden Rohre beliebig sein kann. Dies wird anhand von Rundrohren 20 in Fig. 3 bis 5 sowie von Flachrohren 21 in Fig. 6 und 7 beispielsweise dargestellt, wobei diese Rohre jeweils eine äußere Lamellenverrippung 22 aufweisen. Diese Lamellenverrippung 22 wird von Umgebungsluft beaufschlagt, die in konventioneller Weise das innere Kältemittel zur Abführung der bei der Klimatisierung aufgenommenen Wärme im Kühlbetrieb kühlt.

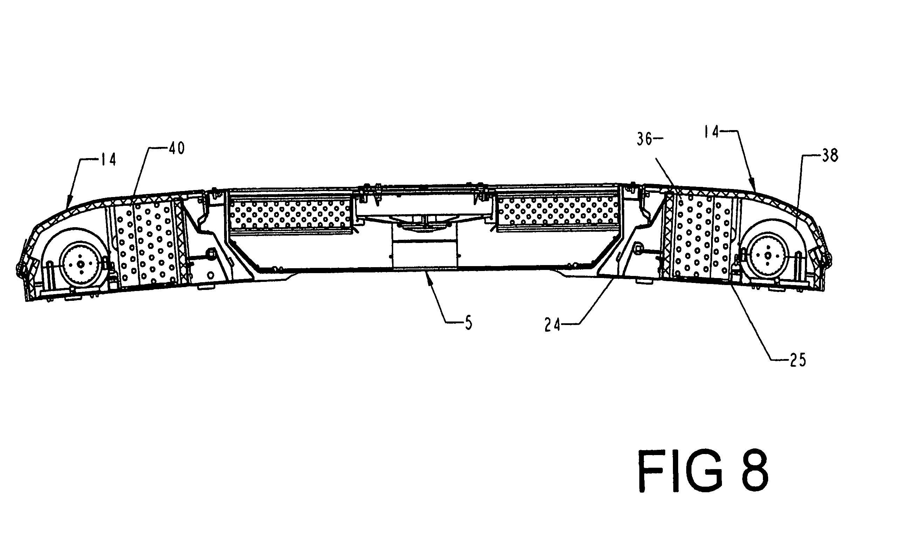

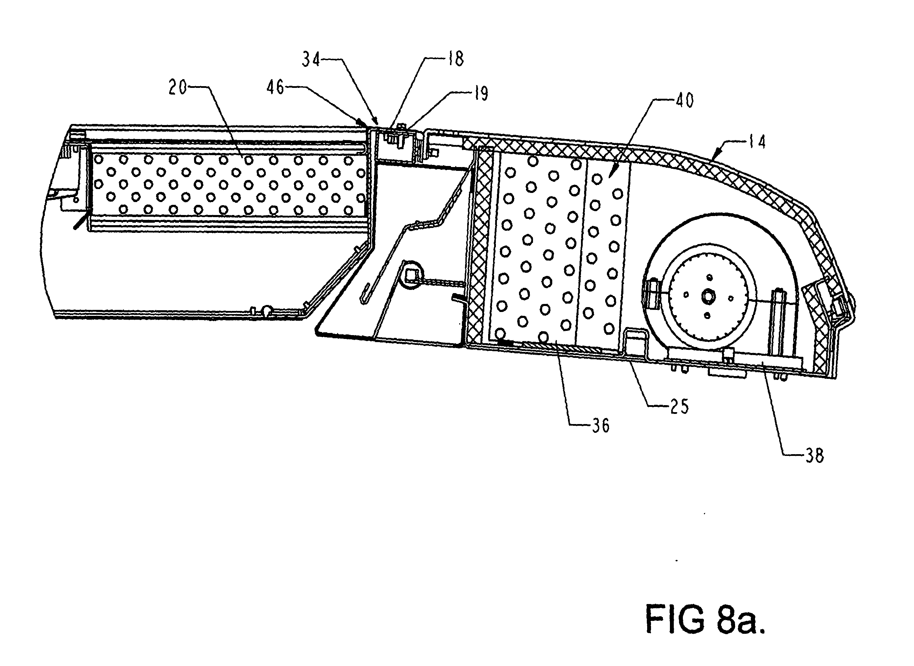

Die eigenen Gehäuse der Module 6 bzw. 6a und 6b, der Module 10 und der Module 14 sind insbesondere in Fig. 8, zum Teil aber auch in den übrigen Figuren, mit den Bezugszeichen 23, 24 und 25 bezeichnet.

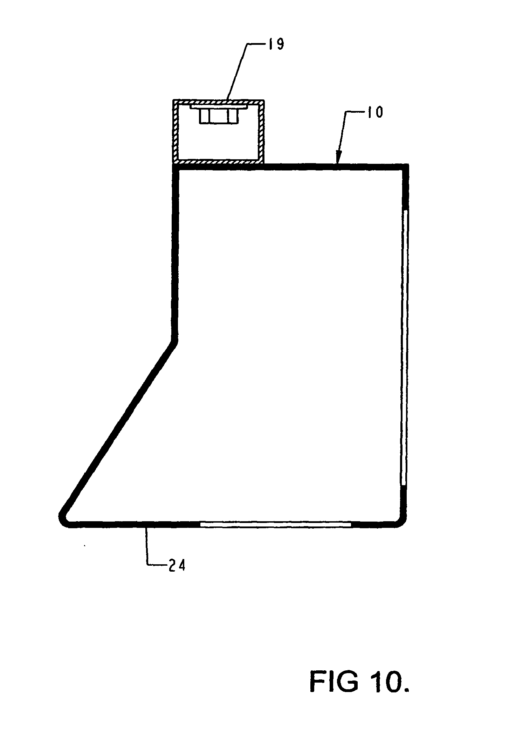

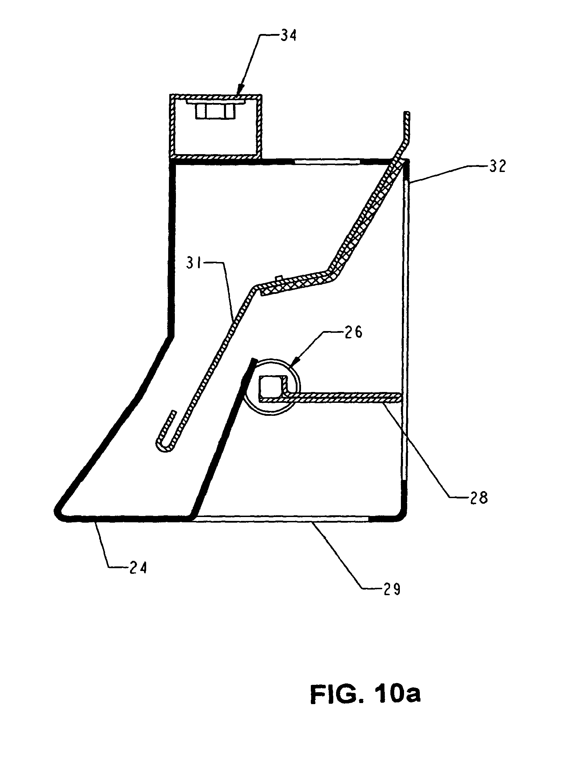

Die Gehäuse 24 der inneren Kanalanordnung sind in den Fig. 10 und 10a noch deutlicher herausgezeichnet.

In Fig. 10a ist innerhalb des Gehäuses auch noch ein Umschaltventil 26 mit einer Einstellplatte 28 dargestellt, mit dem man in konventioneller Weise die zu klimatisierende Luft, welche durch die innere Kanalanordnung 10 geführt ist, im Umluftbetrieb, mit Frischluft oder im Mischbetrieb betreiben kann.

Im Gehäuse 24 ist ansonsten eine Eintrittsöffnung 29 der aus dem Innenraum des Fahrzeugs eintretenden zu klimatisierenden Luft, eine Eintrittsöffnung 30 für von außen eintretende Frischluft, die durch eine Schikane 31 dem Umschaltventil 26 zugeführt wird, und eine Austrittsöffnung 32 ausgebildet, welche die je nachdem zu klimatisierende Innen- oder Außenluft der Verdampfungseinrichtung im Modul 14 zuführt. Aus Fig. 10 ist ferner die Querverbindung 18, 19 noch in einer Weise weitergebildet, die mehr im einzelnen anhand der Fig. 8 nachfolgend noch beschrieben wird.

Das Modul 10 ist deutlich auch im Zentrum der Darstellung von Fig. 8a zu erkennen.

Darüber hinaus sieht man, daß das Modul 14 der Verdampfungseinrichtung noch folgende weitere Elemente enthält: Zum einen ist stets ein Verdampfungswärmetauscher 36 enthalten, der innen vom inneren Kältemittel und außen von der über die innere Kanalanordnung zugeführten zu klimatisierenden Luft beaufschlagt ist. Der Verdampfungswärmetauscher 36 ist dabei mit voller Höhenerstreckung in das Gehäuse 25 eingepaßt. Eine Leistungsvariierung kann durch Variierung der Anzahl von Gebläsen 38 erfolgen, von denen aber nur eines dargestellt ist. In Frage kommt zum Beispiel die Verwendung von ein bis vier Gebläsen pro Modul, so daß wegen der beiderseits symmetrischen Anordnung zu den Modulen 6 dabei tatsächlich die doppelte Gebläsezahl und daher auch die doppelte Verdampfungsleistung unter Verwendung von einem linken und einem rechten Verdampfungswärmetauscher 36 erzeugt wird. Man kann die Zahl der Gebläse 38 aber auch erhöhen oder im anderen Grenzfall auf die Verwendung nur eines Gebläses verzichten.

Wenn die Aufdachklimaanlage nicht nur zum Abkühlen der zu klimatisierenden Luft, sondern alternativ auch zusätzlich zu deren Aufheizung benützt wird, kann in dem Modul 14 der Verdampfungseinrichtung auch noch ein Heizungswärmetauscher mit integriert sein, der in der dargestellten Ausführung mit Rundrohren zweckmäßig mit Kühlmittel eines Antriebsverbrennungsmotors des Omnibusses beheizt sein kann und außen ebenfalls von der zu klimatisierenden Luft beaufschlagt wird. Das gleiche gilt natürlich auch bei der Verwendung von Flachrohren. In nicht dargestellter Weise kann man stattdessen aber auch andere Heizelemente vorsehen, die etwa durch elektrischen Strom beheizbar sind.

In Fig. 8a sind sonst auch nur Rundrohre eingetragen, die ebenfalls alternativ durch Flachrohre ersetzt sein könnten.

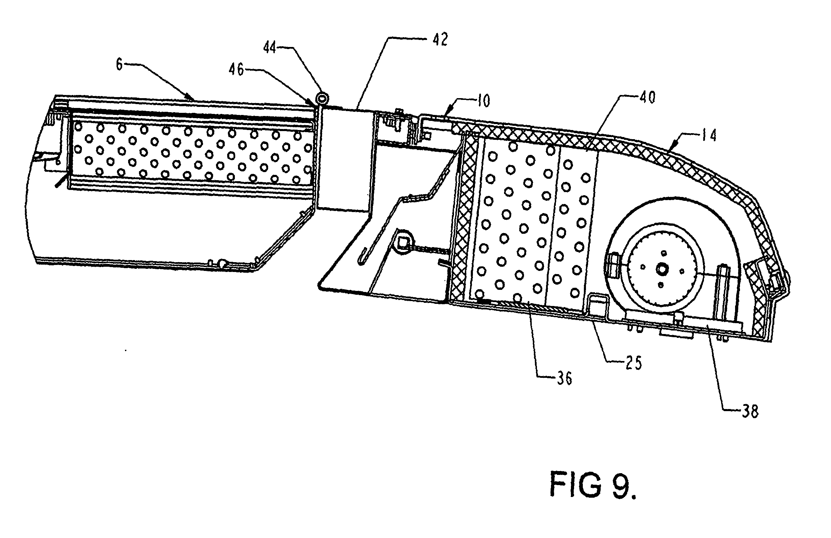

Aus den Fig. 8a und 9 ist zum einen zu ersehen, daß in Anpassung an die Breitenbemessung der Montagefläche 2 die Module 6, 10 und 14 seitlich jeweils durch eine Überbrückungseinrichtung 42 auf Distanz gehalten werden können, die beidseitig vom Modul 6 zwischen diesem und dem Modul 10 eingeschachtelt ist. Eine weitere Überbrückungseinrichtung ist meist entbehrlich, könnte aber zwischen den Modulen 10 und 14 ebenfalls bedarfsweise angeordnet werden. Man erkennt, daß die Überbrückungseinrichtung 42 modulartig von einer gehäuseartigen Struktur gebildet ist (dargestellt nur in Fig. 9).

Ferner ist in den Fig. 8a und 9 dargestellt, daß eine relative Abbiegung des Moduls 10 gegenüber dem Modul 6 in Anpassung an die Oberflächenkrümmung der Montagefläche 2 in Breitenrichtung des Fahrzeugs erfolgen kann. Dabei zeigt Fig. 9 eine scharnierartige Verbindung 44, während Fig. 8a eine biegeweiche Verbindung 46 andeutet.

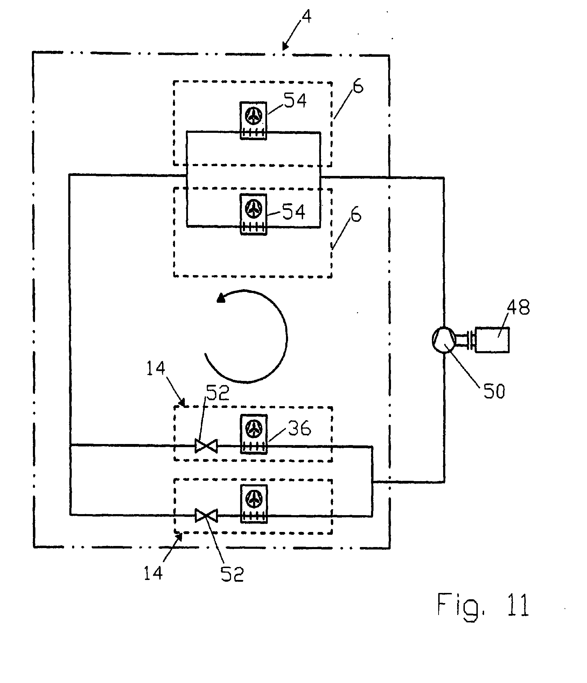

Die Betriebsweise der bisher beschriebenen Anordnungen ist nachfolgend anhand der Fig. 11 ff. zusammen mit einigen weiteren sinnvollen Ergänzungen dargestellt.

Aus den Verrohrungsdiagrammen 11 und 12 des inneren Kältemittels ist zunächst folgender Kreislauf des inneren Kältemittels als eine mögliche Betriebsweise zu ersehen: Vom Antriebsmotor 48 des Omnibusses wird eine Verdichtungseinrichtung bzw. ein Verdichter 50 mechanisch angetrieben, der das innere Kältemittel von einem Zustand niederen Drucks in einen Zustand höheren Drucks durch die Verdichtungswirkung anhebt und der Wärmetauscherverrohrung 20 bzw. 21 der Wärmetauschereinrichtung innerhalb des Moduls 6 innen zuführt, wobei an deren äußerer Verrippung Wärme an Umgebungsluft abgegeben wird. Das innere Kältemittel wird dann im Verdampfermodul 14 einer Expansionseinrichtung 52 zugeführt, wo das innere Kältemittel wiederum in einen Zustand niedrigeren Drucks überführt und in diesem Zustand der Verdampfungseinrichtung 36 innerhalb des Moduls 14 zugeführt wird. Die Expansionseinrichtung 52 ist mechanisch mit der Verdampfungseinrichtung 36 verbunden. Von der Verdampfungseinrichtung kommend wird das innere Kältemittel wieder der Verdichtungseinrichtung 50 zugeführt.

Im Zentrum von Fig. 11 ist symbolisch durch eine Feindarstellung die Umlaufrichtung des inneren Kältemittels angedeutet.

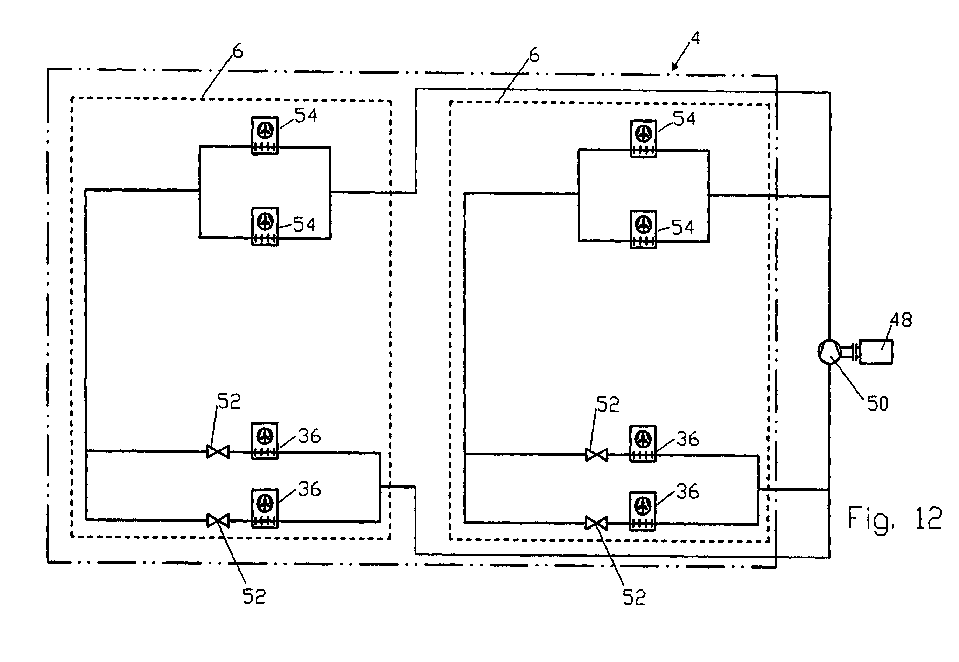

Während bei der Darstellung gemäß Fig. 11 die Verdampfungseinrichtung jeweils im eigenen Modul 14 angeordnet ist, kann sie alternativ gemäß Fig. 12 auch noch im Modul 6 der hochdruckseitigen Wärmetauscheinrichtung mit angeordnet sein.

Zur Vereinfachung der Lesbarkeit ist dabei die im wesentlichen aus den Rohren 20 oder 21 und deren äußerer Verrippung 22 bestehende hochdruckseitige Wärmetauscheinrichtung noch mit dem gemeinsamen Bezugszeichen 54 bezeichnet.

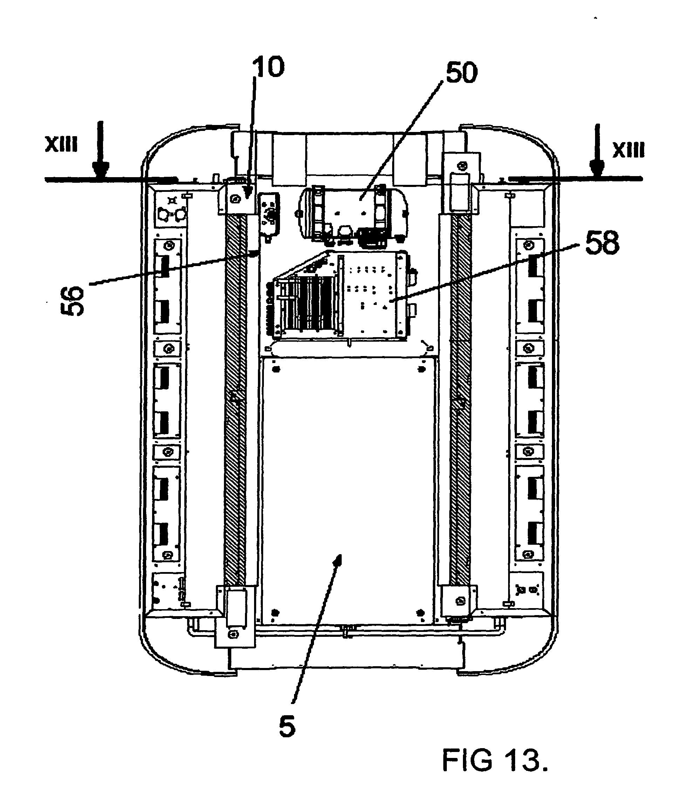

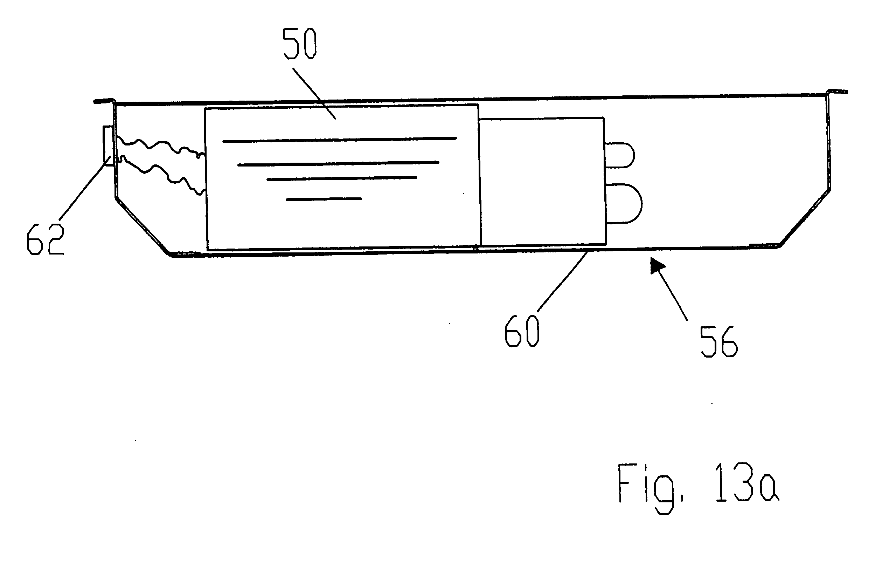

In den Fig. 11 und 12 ist ferner die Verdichtungseinrichtung 50 außerhalb der erfindungsgemäßen Aufdachklimaanalage im Bereich des Antriebsmotors des Fahrzeugs angeordnet. Fig. 13 zeigt die im Rahmen der Erfindung bevorzugte Variante, die Verdichtungseinrichtung 50 in einem eigenen mit eigenem Gehäuse versehenen Modul 56 anzuordnen und in einer entsprechenden Ausnehmung der erfindungsgemäßen Aufdachklimaanlage einzupassen. Zur besseren Veranschaulichung ist in Fig. 13 die untere Abdeckplatte des Moduls 56 weggelassen. Man erkennt, daß hier das Modul 6 eine geringere Längserstreckung hat als die Module 10 und 14 und in dem dadurch gewonnnen Raum die Verdichtungseinrichtung 50 eingepaßt ist. Mit dem Bezugszeichen 58 ist ein konventioneller Installationsblock für die elektrische Versorgung und zugehörige Steuerung der elektrisch betriebenen Einzelkomponenten mit eingezeichnet.

In der Schnittdarstellung nach Fig. 13a ist dabei schematisch das Gehäuse 60 des Moduls 56 zu sehen, in welchem die beiden beschriebenen Elemente 50 und 58 eingepaßt sind. Aus dem Gehäuse 60 ist eine elektrische Versorgungsleitung 62 über eine äußere dargestellte Buchse herausgeführt.

Analog zu dem Modul 56 kann in axialer Verlängerung des Moduls 6 auch oder zusätzlich eine Brennstoffzelleneinrichtung 64 als eigenes Modul mit eigenem Gehäuse 66 eingesetzt werden, welche ihrerseits ein eigenes Modul 68 ergibt.

Nur angedeutet ist der erforderliche eigene Kühlkreislauf 70 der Brennstoffzelleneinrichtung, der ebenfalls in dem Gehäuse 66 enthalten ist. Außerdem sind elektrische Anschlußleitungen 72 für die in der Brennstoffzelleneinrichtung erzeugte elektrische Energie sowie Anschlüsse 74 mit zugeordneten Versorgungsleitungen der Brennstoffzelleneinrichtung für zu- und abgeführten Brennstoff zu sehen, die ebenfalls durch das Gehäuse 66 hindurch geführt sind.

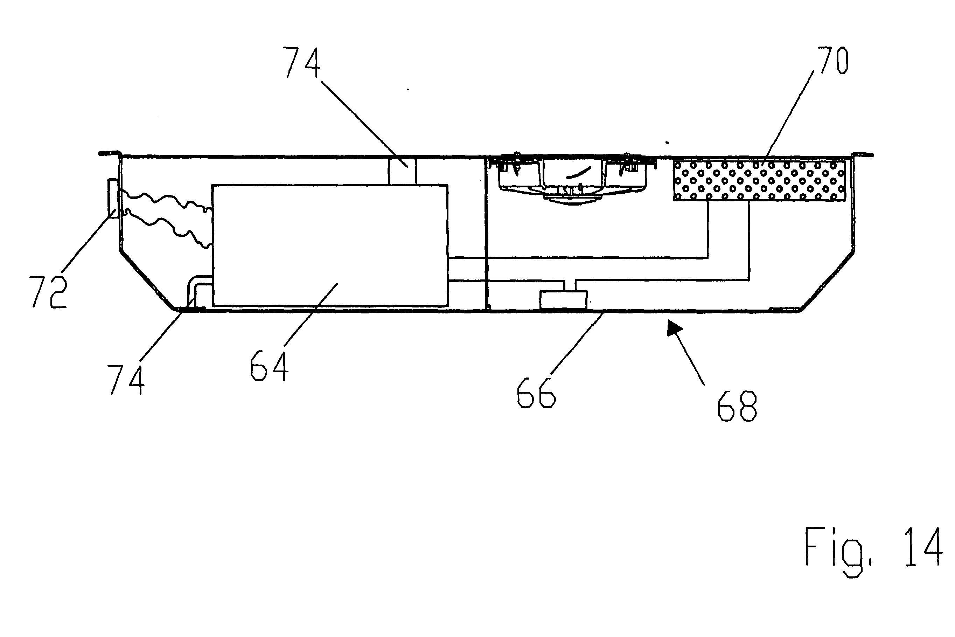

Fig. 14 zeigt dabei eine Ausführungsform, bei der der Brennstoff von außen her im Modul 68 zugeführt und das verbrauchte Gas aus diesem auch wieder abgeführt wird.

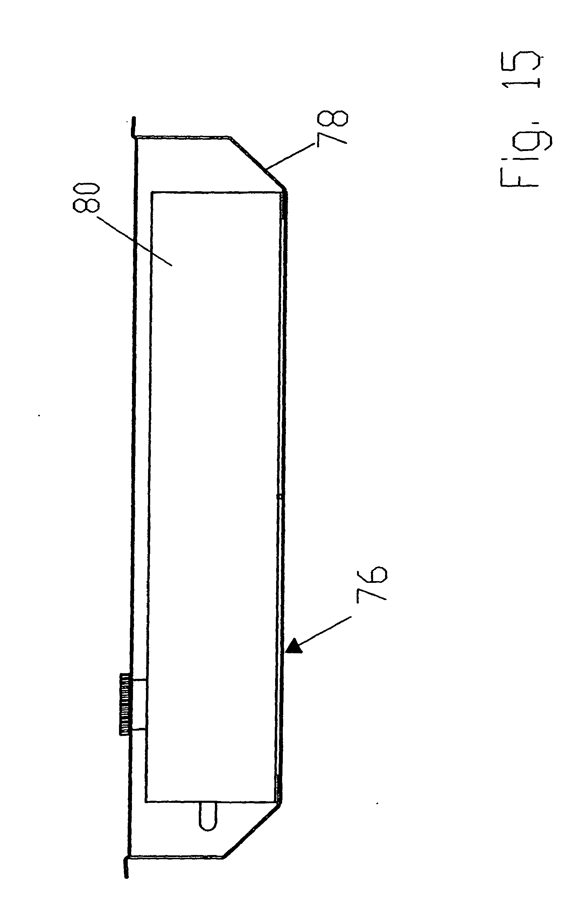

Fig. 15 zeigt demgegenüber ein wiederum eigenständiges Modul 76 mit eigenem Gehäuse 78 mit einem Aufnahmetank 80 von Brennstoff der Brennstoffzelleneinrichtung 64. Dieses Modul 76 kann analog den vorher beschriebenen Modulen 56 und/oder 68 ebenfalls alleine oder in Kombination mit beiden Modulen 56 und 68 oder einem davon innerhalb der Aufdachklimaanlage 4 mit einbezogen sein. Auch hier sind sinngemäß Einzelöffnungen zur Befüllung des Tanks wie auch Entnahmeleitungen zur Entnahme des Brennstoffs zur Brennstoffzelleneinrichtung ergänzt zu denken.

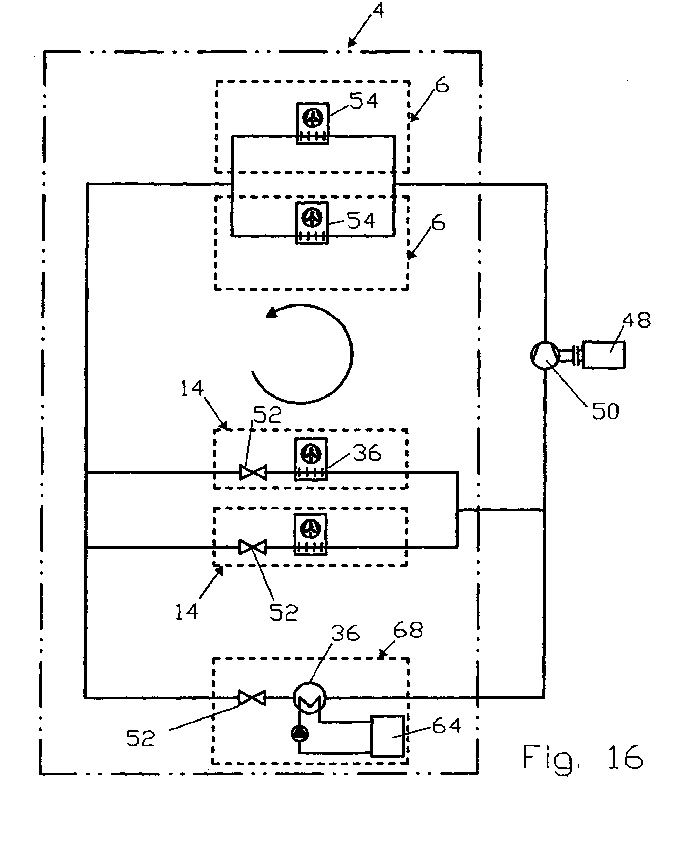

Fig. 16 zeigt in einer Erweiterung von Fig. 11 ein Verrohrungsdiagramm, bei dem die Aufdachklimaanlage um ein Modul mit Brennstoffzelleneinrichtung 68 ergänzt wurde. Hier wird das innere Kältemittel zur Kühlung der Brennstoffzelle 64 vorgesehen. Das sich auf hohem Druckniveau befindliche Kältemittel wird hierzu mittels einer Expansionseinrichtung 52 auf ein niedriges Druckniveau gedrosselt und einer Verdampfungseinrichtung 36 zugeführt. In dargestellter Weise wird das Kältemittel im Kühlkreislauf 70 der Brennstoffzelle gekühlt (vgl. Anspruch 25). Alternativ kann der Kühlkreislauf wiederum als eigenes die Aufdachklimaanlage ergänzendes Modul vorgesehen sein. Es versteht sich, daß auch alternativ oder parallel mittels inneren Kältemittels gekühlte Luft zur Kühlung der Brennstoffzelle vorgesehen sein kann.

## Patentansprüche

1. Aufdachklimaanlage (4) mit Betriebsweise nach dem Kaltdampfkompressionsprinzip unter Verwendung eines inneren Kältemittels für ein Fahrzeug, insbesondere einen Omnibus, bei der
eine von dem inneren Kältemittel nacheinander beaufschlagte Folge einer hochdruckseitigen Wärmetauscheinrichtung (54) mit dazugehöriger Lüftereinrichtung (16), einer Expansionseinrichtung (52) und einer Verdampfungseinrichtung (36),
eine in bezug auf die Aufdachklimaanlage (4) innere Kanalanordnung (12) zur Führung von zu klimatisierender Luft, die in Wärmetausch mit der Verdampfungseinrichtung (36) steht,
und ein modularer Aufbau (6) einer hochdruckseitigen Wärmetauscheinrichtung (54) mit dazugehöriger Lüftereinrichtung (16) in einem eigenem Gehäuse (6, 14) vorgesehen sind,
**dadurch gekennzeichnet,**
**daß** Anschlüsse (34) für die Kopplung gleichartiger solcher Module (6a, 6b) einer hochdruckseitigen Wärmetauscheinrichtung (54) vorsehbar, vorbereitet oder ausgebildet sind, und
**daß** die Module (6 bzw. 6a, 6b) auf rastermäßige Kopplung (7, 8; 34) von Modulen gleicher Leistung und/oder Modulen abgestufter Leistung ausgelegt sind.

2. Aufdachklimaanlage nach Anspruch 1, **dadurch gekennzeichnet, daß** die Kopplung der Module (6 bzw. 6a, 6b) in Längsrichtung des Fahrzeugs vorgesehen ist.

3. Aufdachklimaanlage nach Anspruch 1 oder 2, **dadurch gekennzeichnet, daß** die hochdruckseitige Wärmetauscheinrichtung (54) zur Führung des inneren Kältemittels Rundrohre (20) aufweist.

4. Aufdachklimaanlage nach Anspruch 1 oder 2, **dadurch gekennzeichnet, daß** die hochdruckseitige Wärmetauscheinrichtung (54) zur Führung des inneren Kältemittels Flachrohre (21) aufweist.

5. Aufdachklimaanlage nach einem der Ansprüche 1 bis 4, **dadurch gekennzeichnet, daß** das Gehäuse (23) der hochdruckseitigen Wärmetauscheinrichtung (54) so bemessen ist, daß zur Führung des inneren Kältemittels wahlweise Rundrohre (20) oder Flachrohre (21) einbaubar sind.

6. Aufdachklimaanlage nach einem der Ansprüche 1 bis 5, **dadurch gekennzeichnet, daß** sie auch eine Heizeinrichtung (40) zur Erwärmung der zu klimatisierenden Luft enthält.

7. Aufdachklimaanlage nach Anspruch 6, **dadurch gekennzeichnet, daß** die Heizeinrichtung mindestens einen Heizungswärmetauscher (40) aufweist, der in der Verdampfungseinrichtung (36) mit seiner äußeren Verrippung in Reihe mit dem Luftweg der zu klimatisierenden Luft längs der äußeren Verrippung mindestens eines Verdampfungswärmetauschers (36) angeordnet ist.

8. Aufdachklimaanlage nach einem der Ansprüche 1 bis 7, **dadurch gekennzeichnet, daß** im Raster mindestens einige, vorzugsweise alle, Module (6a, 6b) mit jeweils gleicher Längserstreckungslänge angeordnet sind.

9. Aufdachklimaanlage nach einem der Ansprüche 1 bis 8, **dadurch gekennzeichnet, daß** das Modul (6 bzw. 6a, 6b) auch eine Verdampfungseinrichtung (36) und mindestens einen Abschnitt der inneren Kanalanordnung (12) enthält.

10. Aufdachklimaanlage nach einem der Ansprüche 1 bis 8, **dadurch gekennzeichnet, daß** die innere Kanalanordnung (12) gesondert vom Modul (6 bzw. 6a, 6b) vorgesehen und seitlich an dieses angeschlossen ist.

11. Aufdachklimaanlage nach einem der Ansprüche 1 bis 10, **dadurch gekennzeichnet, daß** die Verdampfungseinrichtung (36) seitlich von der inneren Kanalanordnung (12) angeordnet ist.

12. Aufdachklimaanlage nach einem der Ansprüche 1 bis 11, **dadurch gekennzeichnet, daß** die Verdampfungseinrichtung (36) und/oder die innere Kanaleinrichtung (12) für sich mit jeweils eigenem Gehäuse (24; 25) modular (10; 14) ausgebildet ist bzw. sind.

13. Aufdachklimaanlage nach einem der Ansprüche 1 bis 12, **dadurch gekennzeichnet, daß** sie in Querrichtung des Fahrzeugs abschnittsweise und/oder modular (6, 10, 14) aufgeteilt und zwischen benachbarten Paaren von Abschnitten, Modulen oder von Abschnitt und Modul in deren gegenseitiger Winkelstellung quer zum Fahrzeug einstellbar (44; 46) ist.

14. Aufdachklimaanlage nach Anspruch 13, **dadurch gekennzeichnet, daß** mindestens ein Paar von Abschnitten, Modulen oder von Abschnitt und Modul über eine scharnierartige (44) und/oder biegeweiche (46) Verbindung zusammenhängt.

15. Aufdachklimaanlage nach Anspruch 13 oder 14, **gekennzeichnet durch** eine zwischen den Paaren von Abschnitten, Modulen oder von Abschnitt und Modul eingeschachtelte Überbrückungseinrichtung (42).

16. Aufdachklimaanlage nach einem der Ansprüche 1 bis 15, **dadurch gekennzeichnet, daß** verschiedene Leistungsstufen des Moduls (6, 14) über eine verschiedene Anzahl gleicher Gebläseeinheiten (38), die in die Verdampfungseinrichtung (36) und/oder eine verschiedene Anzahl gleicher Lüftereinheiten (16), die in die hochdruckseitige Wärmetauscheinrichtung (54) einsetzbar ist oder sind, wählbar sind.

17. Aufdachklimaanlage nach einem der Ansprüche 1 bis 16, **dadurch gekennzeichnet, daß** sich die hochdrucksseitige Wärmetauscheinrichtung (54), die Verdampfungseinrichtung (36) und mindestens ein Abschnitt der inneren Kanalanordnung (12) jeweils in Längsrichtung des Fahrzeugs (bzw. des Moduls 6, 10, 14) erstrecken.

18. Aufdachklimaanlage nach einem der Ansprüche 1 bis 17, **gekennzeichnet durch** einen Aufbau der Aufdachklimaanlage (4) in Querschnittsrichtung mit einer zentralen Anordnung der hochdruckseitigen Wärmetauscheinrichtung (54), daran beidseitig außen folgender inneren Kanalanordnung (12) und wiederum daran beidseitig außen folgender Verdampfungseinrichtung (36), die jeweils mit der Expansionseinrichtung (52) gekoppelt ist.

19. Aufdachklimaanlage nach einem der Ansprüche 1 bis 18, **dadurch gekennzeichnet, daß** die innere Kanalanordnung (12) der Aufdachklimaanlage (4) einen Einbauraum (in 24) aufweist, in dem ein Umschaltventil (26) zwischen den Betriebsweisen einer Klimatisierung der Innenluft des Fahrzeugs, der Klimatisierung von in den Fahrzeug eingeleiteter Außenluft und/oder eines Mischbetriebs zwischen diesen beiden Betriebsweisen eingebaut oder einbaubar ist.

20. Aufdachklimaanlage nach einem der Ansprüche 1 bis 19, **dadurch gekennzeichnet, daß** bei mindestens einem Modul (6 bzw. 6a, 6b) die hochdruckseitige Wärmetauscheinrichtung (54) nebst Lüftereinrichtung (16) durch eine Verdichtungseinrichtung (50) ergänzt ist.

21. Aufdachklimaanlage nach Anspruch 20, **dadurch gekennzeichnet, daß** die ergänzende Verdichtungseinrichtung (50) ihrerseits modular (56) mit eigenem Gehäuse ausgebildet ist.

22. Aufdachklimaanlage nach einem der Ansprüche 1 bis 21, **dadurch gekennzeichnet, daß** bei mindestens einem Modul (6 bzw. 6a, 6b) die hochdruckseitige Wärmetauscheinrichtung (54) nebst Lüftereinrichtung (16) durch eine Brennstoffzelleneinrichtung (64) ergänzt ist.

23. Aufdachklimaanlage nach Anspruch 22, **dadurch gekennzeichnet, daß** die ergänzende Brennstoffzelleneinrichtung (64) ihrerseits modular (68) mit eigenem Gehäuse (66) ausgebildet ist.

24. Aufdachklimaanlage nach Anspruch 22 oder 23, **dadurch gekennzeichnet, daß** der Brennstoffzelleneinrichtung (64) innerhalb der Aufdachklimaanlage eine eigene Kühleinrichtung (70) oder ein eigenes Kühlmodul zugeordnet ist.

25. Aufdachklimaanlage nach Anspruch 23 oder 24, **dadurch gekennzeichnet, daß** das innere Kältemittel auch als Kühlmittel für die Brennstoffzelleneinrichtung (64) vorgesehen ist.

26. Aufdachklimaanlage nach einem der Ansprüche 22 bis 25, **dadurch gekennzeichnet, daß** ein Tank (80) für den Brennstoff der Brennstoffzelleneinrichtung (64) in die Aufdachklimaanlage (4) einbezogen ist.

27. Aufdachklimaanlage nach Anspruch 26, **dadurch gekennzeichnet, daß** der Tank (80) seinerseits als eigenes Modul (76) ausgebildet ist.

28. Aufdachklimaanlage nach den Ansprüchen 23 und 26, **dadurch gekennzeichnet, daß** der Tank (80) in das Modul (68) der Brennstoffzelleneinrichtung (64) einbezogen ist.

29. Aufdachklimaanlage nach einem der Ansprüche 1 bis 28, **dadurch gekennzeichnet, daß** die Betriebsweise überkritisch ausgelegt ist und die hochdruckseitige Wärmetauscheinrichtung (54) einen Gaskühler für das innere Kältemittel aufweist.

## Claims

1. Roof-top air-conditioning system (4) for a vehicle, in particular a bus, operating according to the vapour-compression principle using an internal refrigerant, in which a series of devices consisting of a high-pressure side heat exchanger (54) with an associated fan (16), an expansion device (52) and an evaporating device (36) subjected in succession to the action of the internal refrigerant, an internal duct arrangement (12) in relation to the roof-top air-conditioning system (4) for conducting air to be conditioned, exchanging heat with the evaporating device (36), and a modular design (6) for a high-pressure side heat exchanger (54) with an associated fan (16) in its own housing (6, 14) are provided, **characterised in that** connections (34) for coupling identical modules (6a, 6b) of this kind of a high-pressure side heat exchanger (54) can be provided, are prepared or are formed and that the modules (6 or 6a, 6b) are designed for the grid-like coupling (7, 8; 34) of modules of identical output and/or modules of stepped output.

2. Roof-top air-conditioning system according to claim 1, **characterised in that** the modules (6 or 6a, 6b) are coupled in the longitudinal direction of the vehicle.

3. Roof-top air-conditioning system according to claim 1 or claim 2, **characterised in that** the high-pressure side heat exchanger (54) has round tubes (20) for conducting the internal refrigerant.

4. Roof-top air-conditioning system according to claim 1 or claim 2, **characterised in that** the high-pressure side heat exchanger (54) has flat tubes (21) for conducting the internal refrigerant.

5. Roof-top air-conditioning system according to one of claims 1 to 4, **characterised in that** the housing (23) of the high-pressure side heat exchanger (54) is dimensioned in such a manner that either round tubes (20) or flat tubes (21) can be installed for conducting the internal refrigerant.

6. Roof-top air-conditioning system according to one of claims 1 to 5, **characterised in that** it also contains a heating device (40) for heating the air to be conditioned.

7. Roof-top air-conditioning system according to claim 6, **characterised in that** the heating device has at least one heater core (40) arranged in the evaporating device (36) with its outer fins aligned with the path of the air to be conditioned along the outer fins of at least one evaporative heat exchanger (36).

8. Roof-top air-conditioning system according to one of claims 1 to 7, **characterised in that** at least some, preferably all of the modules (6a, 6b) arranged in the grid have the same longitudinal extent.

9. Roof-top air-conditioning system according to one of claims 1 to 8, **characterised in that** the module (6 or 6a, 6b) also contains an evaporating device (36) and at least one section of the internal duct arrangement (12).

10. Roof-top air-conditioning system according to one of claims 1 to 8, **characterised in that** the internal duct arrangement (12) is provided separately from the module (6 or 6a, 6b) and is connected laterally thereto.

11. Roof-top air-conditioning system according to one of claims 1 to 10, **characterised in that** the evaporating device (36) is arranged laterally of the internal duct arrangement (12).

12. Roof-top air-conditioning system according to one of claims 1 to 11, **characterised in that** the evaporating device (36) and/or the internal duct arrangement (12) is/are itself/themselves designed in a modular (10; 14) manner with its/their own housing(s) (24; 25).

13. Roof-top air-conditioning system according to one of claims 1 to 12, **characterised in that** it is divided into sections and/or in a modular (6, 10, 14) manner in the transverse direction of the vehicle and the relative angular positions of adjacent pairs of sections, modules or of one section and one module can be adjusted (44; 46) transversely to the vehicle.

14. Roof-top air-conditioning system according to claim 13, **characterised in that** at least one pair of sections, modules or of one section and one module is joined together by means of a hinge-type (44) and/or flexible (46) connection.

15. Roof-top air-conditioning system according to claim 13 or claim 14, **characterised by** a bridging device (42) nested between the pairs of sections, modules or of one section and one module.

16. Roof-top air-conditioning system according to one of claims 1 to 15, **characterised in that** different output levels for the module (6, 14) can be selected by means of a different number of identical blower units (38) which can be inserted into the evaporating device (36) and/or a different number of identical fan units (16) which can be inserted into the high-pressure side heat exchanger (54).

17. Roof-top air-conditioning system according to one of claims 1 to 16, **characterised in that** the high-pressure side heat exchanger (54), the evaporating device (36) and at least one section of the internal duct arrangement (12) each extend in the longitudinal direction of the vehicle (or of the module 6, 10, 14).

18. Roof-top air-conditioning system according to one of claims 1 to 17, **characterised by** a design for the roof-top air-conditioning system (4) in the transverse direction with a central arrangement of the high-pressure side heat exchanger (54), followed on the outside on either side by an internal duct arrangement (12) and in turn followed on the outside on either side by an evaporating device (36), each coupled to the expansion device (52).

19. Roof-top air-conditioning system according to one of claims 1 to 18, **characterised in that** the internal duct arrangement (12) of the roof-top air-conditioning system (4) has an installation space (in 24) in which a valve (26) for switching between conditioning the inside air in the vehicle, conditioning outside air introduced into the vehicle and/or a combination of these two methods of operation is installed or can be installed.

20. Roof-top air-conditioning system according to one of claims 1 to 19, **characterised in that**, in at least one module (6 or 6a, 6b), the high-pressure side heat exchanger (54) is provided with a compression device (50) in addition to the fan (16).

21. Roof-top air-conditioning system according to claim 20, **characterised in that** the additional compression device (50) in turn has a modular (56) design with its own housing.

22. Roof-top air-conditioning system according to one of claims 1 to 21, **characterised in that**, in at least one module (6 or 6a, 6b), the high-pressure side heat exchanger (54) is provided with a fuel cell device (64) in addition to the fan (16).

23. Roof-top air-conditioning system according to claim 22, **characterised in that** the additional fuel cell device (64) in turn has a modular (68) design with its own housing (66).

24. Roof-top air-conditioning system according to claim 22 or claim 23, **characterised in that** the fuel cell device (64) has its own associated cooling device (70) or its own associated cooling module within the roof-top air-conditioning system.

25. Roof-top air-conditioning system according to claim 23 or claim 24, **characterised in that** the internal refrigerant is also provided as the coolant for the fuel cell device (64).

26. Roof-top air-conditioning system according to one of claims 22 to 25, **characterised in that** a tank (80) for the fuel of the fuel cell device (64) is incorporated into the roof-top air-conditioning system (4).

27. Roof-top air-conditioning system according to claim 26, **characterised in that** the tank (80) is in turn designed as a separate module (76).

28. Roof-top air-conditioning system according to claims 23 and 26, **characterised in that** the tank (80) is incorporated into the module (68) of the fuel cell device (64).

29. Roof-top air-conditioning system according to one of claims 1 to 28, **characterised in that** the method of operation is supercritical and the high-pressure side heat exchanger (54) has a gas cooler for the internal refrigerant.

## Revendications

1. Installation de climatisation montée sur le toit (4), avec un mode de fonctionnement selon le principe de la compression de vapeur froide, faisant utilisation d'un fluide frigorigène intérieur pour un véhicule, en particulier un omnibus, pour laquelle sont prévus :
une succession, sollicitée les uns après les autres par le fluide frigorigène intérieur, d'un dispositif d'échange de chaleur (54) situé côté haute pression avec un dispositif aérateur (16) afférent, un dispositif d'expansion (52) et un dispositif d'évaporation (36),
un agencement de canaux (12) intérieurs par rapport à l'installation de climatisation montée sur le toit (4), pour guider de l'air à climatiser, placé en échange thermique avec le dispositif d'évaporation (36),
et une structure (6) modulaire d'un dispositif d'échange de chaleur (54) situé côté haute pression, avec un dispositif aérateur (16) afférent, dans un boîtier (6, 14) propre
**caractérisée en ce que**
des raccordements (34) pour le couplage de tels modules (6a, 6b) de même type d'un dispositif d'échange de chaleur (34) côté haute pression sont susceptibles d'être prévus, sont préparés ou réalisés, et
**en ce que** les modules (6 ou 6a, 6b) sont conçus pour le couplage (7, 8 ; 34), à la façon d'une trame, de modules de puissance identique et/ou de modules de puissance étagée.

2. Installation de climatisation montée sur le toit selon la revendication 1, **caractérisée en ce que** le couplage des modules (6 ou 6a, 6b) est prévu dans la direction longitudinale du véhicule.

3. Installation de climatisation montée sur le toit selon la revendication 1 ou 2, **caractérisée en ce que** le dispositif d'échange de chaleur (54) situé côté haute pression présente des tubes ronds (20) pour guider le fluide frigorigène intérieur.

4. Installation de climatisation montée sur le toit selon la revendication 1 ou 2, **caractérisée en ce que** le dispositif d'échange de chaleur (54) situé côté haute pression présente des tubes plats (21) pour le guidage du fluide frigorigène intérieur.

5. Installation de climatisation montée sur le toit selon l'une des revendications 1 à 4, **caractérisée en ce que** le boîtier (24) du dispositif d'échange de chaleur (54) situé côté haute pression est dimensionné de manière que des tubes ronds (20) ou des tubes plats (21) puissent, au choix, être montés pour le guidage du fluide frigorigène intérieur.

6. Installation de climatisation montée sur le toit selon l'une des revendications 1 à 5, **caractérisée en ce qu'**elle contient également un dispositif de chauffage (40) pour chauffer l'air à climatiser.

7. Installation de climatisation montée sur le toit selon la revendication 6, **caractérisée en ce que** le dispositif de chauffage présente au moins un échangeur de chaleur de chauffage (40) disposé dans le dispositif d'évaporation (36) avec son ailetage extérieur en série avec le chemin d'air suivi par l'air à climatiser, le long de l'ailetage extérieur d'au moins un échangeur de chaleur d'évaporation (36).

8. Installation de climatisation montée sur le toit selon l'une des revendications 1 à 7, **caractérisé en ce qu'**au moins quelques uns, de préférence tous les modules (6a, 6b), ayant une longueur en direction longitudinale chaque fois identique, sont disposés en une trame.

9. Installation de climatisation montée sur le toit selon l'une des revendications 1 à 8, **caractérisée en ce que** le module (6 ou 6a, 6b) contient également un dispositif d'évaporation (36) et au moins un tronçon de l'agencement à canaux (12) intérieur.

10. Installation de climatisation montée sur le toit selon l'une des revendications 1 à 8, **caractérisée en ce que** l'agencement à canaux (12) intérieur est prévu séparément du module (6 ou 6a, 6b) et est raccordé latéralement à celui-ci.

11. Installation de climatisation montée sur le toit selon l'une des revendications 1 à 10, **caractérisé en ce que** le dispositif d'évaporation (36) est disposé sur le côté de l'agencement à canaux (12) intérieur.

12. Installation de climatisation montée sur le toit selon l'une des revendications 1 à 11, **caractérisée en ce que** le dispositif d'évaporation (36) et/ou le dispositif à canaux (12) intérieur est ou sont réalisé(s) en soi avec chacun un boîtier (24 ; 25) propre, de façon modulaire (10 ; 14).

13. Installation de climatisation montée sur le toit selon l'une des revendications 1 à 12, **caractérisée en ce qu'**elle est subdivisée par tronçon et/ou de façon modulaire (6, 10, 14) dans la direction transversale du véhicule et est réglable (44 ; 46) entre des paires voisines de tronçons, de modules ou de tronçon, de module, quant à leur position angulaire mutuelle, transversalement par rapport au véhicule.

14. Installation de climatisation montée sur le toit selon la revendication 13, **caractérisé en ce qu'**au moins une paire de tronçons, de modules ou de tronçon et de module est reliée par une liaison du genre d'une charnière (44) et/ou présentant une souplesse en flexion (46).

15. Installation de climatisation montée sur le toit selon la revendication 13 ou 14, **caractérisée par** un dispositif de pontage (42) imbriqué entre les paires de tronçons, de modules ou de tronçon et de module.

16. Installation de climatisation montée sur le toit selon l'une des revendications 1 à 15, **caractérisé en ce que** différents niveaux de puissance de module (6, 14) peuvent être sélectionnés, par le biais d'un nombre différent d'unités de soufflante (38) identiques, pouvant être mis en oeuvre dans le dispositif d'évaporation (36), et/ou par le biais d'un nombre différent d'unités d'aérateur (16) identiques pouvant être mis en oeuvre dans le dispositif d'échange de chaleur (54) situé côté haute pression.

17. Installation de climatisation montée sur le toit selon l'une des revendications 1 à 16, **caractérisée en ce que** le dispositif d'échange de chaleur (54) situé côté haute pression, le dispositif d'évaporation (36) et au moins un tronçon de l'agencement de canaux (12) intérieur s'étendent chaque fois en direction longitudinale du véhicule (respectivement du module 6, 10, 14).

18. Installation de climatisation montée sur le toit selon l'une des revendications 1 à 17, **caractérisée par** une construction de l'installation de climatisation montée sur le toit (4), en direction de la coupe transversale, faisant appel à un agencement central du dispositif d'échange de chaleur (54) côté haute pression, à un agencement de canaux (12) interne venant à la suite de celui-ci, extérieurement et des deux côtés et, à son tour, au dispositif d'évaporation (36) venant à la suite de celui-ci, extérieurement et des deux côtés, qui est respectivement couplé au dispositif d'évaporation (52).

19. Installation de climatisation montée sur le toit selon l'une des revendications 1 à 18, **caractérisée en ce que** l'agencement de canaux (12) intérieur de l'installation de climatisation montée sur le toit (4) présente un volume de montage (dans 24), dans lequel peut être montée une soupape de commutation (26), pour la commutation entre les modes de fonctionnement d'une climatisation de l'air intérieur du véhicule, de climatisation d'air extérieur introduit dans le véhicule et/ou d'un mode mixte entre ces deux modes de fonctionnement.

20. Installation de climatisation montée sur le toit selon l'une des revendications 1 à 19, **caractérisée en ce que**, dans le cas d'au moins un module (6 ou 6a, 6b), le dispositif d'échange de chaleur (54) situé côté haute pression, outre le dispositif d'aérateur (16), est complété par un dispositif compresseur (50).

21. Installation de climatisation montée sur le toit selon la revendication 20, **caractérisée en ce que** le dispositif de compression (20) de complément est réalisé, de son côté, de façon modulaire (56) avec un boîtier propre.

22. Installation de climatisation montée sur le toit selon l'une des revendications 1 à 21, **caractérisée en ce que**, dans le cas d'au moins un module (6 ou 6a, 6b), le dispositif d'échange de chaleur (54) situé côté haute pression, outre le dispositif d'aérateur (16) est complété par un dispositif à pile à combustible (64).

23. Installation de climatisation montée sur le toit selon la revendication 22, **caractérisée en ce que** le dispositif à pile à combustible (64) de complément, de son côté, est de réalisation modulaire (68) avec un boîtier (66) propre.

24. Installation de climatisation montée sur le toit selon la revendication 22 ou 23, **caractérisée en ce que**, au dispositif à pile à combustible (64), est associé, à l'intérieur de l'installation de climatisation montée sur le toit, un dispositif de refroidissement (70) propre, ou un module de refroidissement propre.

25. Installation de climatisation montée sur le toit selon la revendication 23 ou 24, **caractérisée en ce que** le fluide frigorigène intérieur est également prévu comme fluide frigorigène pour le dispositif à pile à combustible (64).

26. Installation de climatisation montée sur le toit selon l'une des revendications 22 à 25, **caractérisée en ce qu'**un réservoir (80) pour le combustible du dispositif à pile à combustible (64) est prévu dans l'installation de climatisation montée sur le toit (4).

27. Installation de climatisation montée sur le toit selon la revendication 26, **caractérisée en ce que** le réservoir (80) de son côté est réalisé sous forme de module (76) propre.

28. Installation de climatisation montée sur le toit selon les revendications 23 et 26, **caractérisé en ce que** le réservoir (80) est intégré dans le module (68) du dispositif à pile à combustible (64).

29. Installation de climatisation montée sur le toit selon l'une des revendications 1 à 28, **caractérisée en ce que** le mode de fonctionnement est sur-critique de par la conception, et le dispositif d'échange de chaleur (54) installé côté haute pression présente un refroidisseur de gaz pour le fluide frigorigène intérieur.
